# EUROPEAN PATENT SPECIFICATION

(11) **EP 4 422 883 B1**
(45) Date of publication and mention of the grant of the patent: **15.04.2026**
(21) Application number: 21811666.3
(22) Date of filing: 29.10.2021
(51) Int. Cl.: B60B 9/26

(54) **NON-PNEUMATIC WHEEL WITH INTERLOCKING SPOKE FEATURE**
NICHTPNEUMATISCHER REIFEN MIT ÜBRLAPPENDEN SPEICHEN
ROUE NON PNEUMATIQUE AVEC RAYONS SUPERPOSÉS

(43) Date of publication of application: 04.09.2024
(73) Proprietor: COMPAGNIE GENERALE DES ETABLISSEMENTS MICHELIN, 63000 Clermont-Ferrand (FR)
(72) Inventor: MILES, Kevin C, Greenville, South Carolina 29605 (US); CRON, Steven M, Greenville, South Carolina 29605 (US); NAROWSKI, Brian, Greenville, South Carolina 29605 (US)
(74) Representative: Casalonga
(86) International application number: PCT/US2021/057253
(87) International publication number: WO 2023/075784

(56) References cited:
- WO-A1-2018/200971
- WO-A1-2019/051493
- WO-A1-2020/068051
- WO-A1-2021/107945
- WO-A1-2021/133376

## Description

### FIELD OF THE INVENTION

The subject matter of the present invention relates to non-pneumatic wheels and in particular, to non-pneumatic wheels having reinforced spokes having improved spoke to hub attachment.

### BACKGROUND OF THE INVENTION

Non-pneumatic wheels may have a series of circumferentially adjacent spokes arranged around the axis of rotation of the wheel between the hub and the outer tread band of the non-pneumatic tire. The spokes allow for deformation of the wheel, allowing it to absorb the bumps of the terrain over which the wheel rolls, and also allow for the outer tread band to deform so as to form a flat contact patch against the ground, allowing the outer tread band to lay flat against a flat ground surface, for example, and distribute the load across the contact patch.

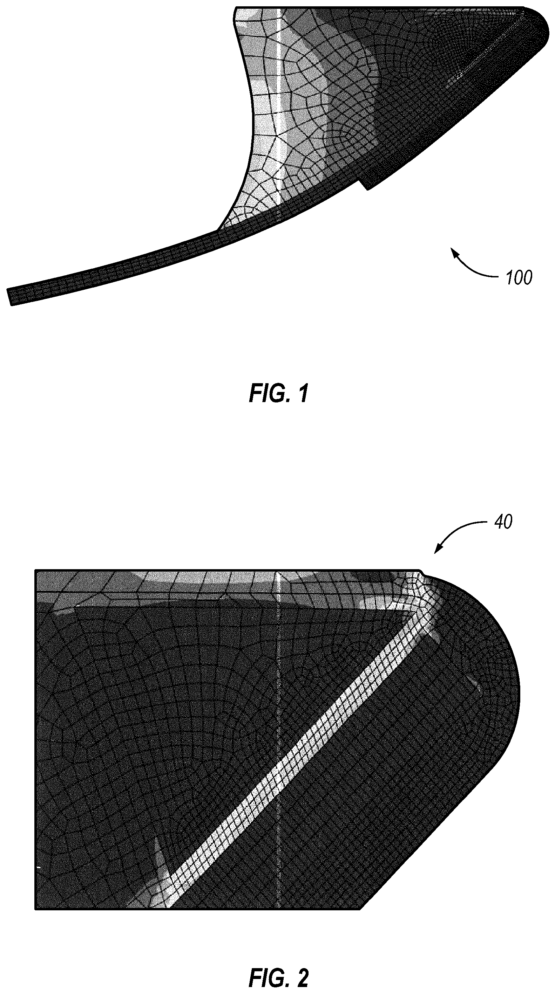

Loading of the wheel by the weight of the vehicle causes deformation in the spoke and creates localized stress in the individual spokes as the spokes travel around the axis of rotation and travel through the contact patch. FIG. 1 and FIG. 2 show, for example, a finite element model of the radially inner foot 112 of a spoke 100, with the upper flat portion fixed to a rigid hub 12 and subject to compression loadings from below. This is an approximation of the stress that the spoke 100 would experience when within the contact patch of a wheel under load. FIG. 2 shows a close-up vie of the radially inner portion of the spoke shown in FIG. 1 showing the stress concentration 40, at the edge of the spoke 100 where it attaches to the hub. The hub in the finite element model is not shown, but instead a hub is approximated by fixing the elements at the upper flat portion of the spoke end which represent their bonding to the comparatively stiffer hub.

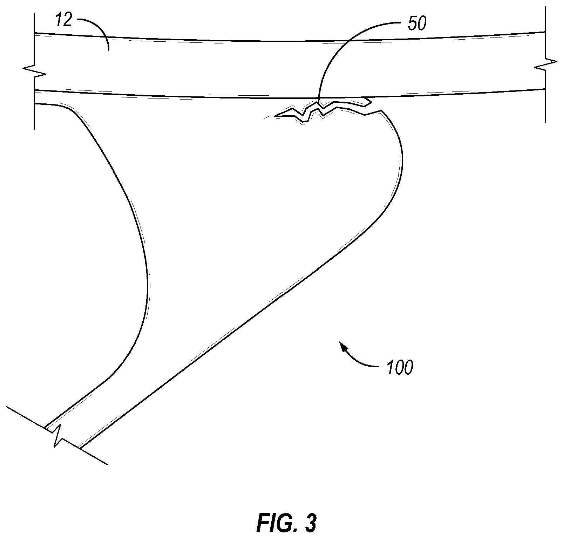

Such a stress concentration is thought to contribute to crack initiation resulting in tearing 50 of the spoke at or near the attachment of the spoke 100 to the hub 12 as shown in FIG. 3. Such tearing results in having to take the wheel out of service for repair or replacement diminishing the desired service life of the wheel. Prior art document WO 2021/133376 A1 discloses a non pneumatic wheel according to the preamble of claim 1.

It would be advantageous to provide an improvement to the non-pneumatic wheel so as to prolong the service life of the wheel. In particular it would be advantageous to prevent tearing of the spoke at or near the attachment of the spoke to the hub.

### SUMMARY OF THE INVENTION

Aspects and advantages of the invention will be set forth in part in the following description, or may be obvious from the description, or may be learned through practice of the invention.

In one exemplary embodiment, a non-pneumatic wheel having a hub for attachment to a vehicle, a radially outer tread band, and a plurality of spokes attaching the radially outer tread band to the hub, each of the spokes comprising: a radially outer end attached to the radially outer tread band; a radially inner end attached to the hub; an intermediate portion connecting the radially outer end and the radially inner end; wherein the radially inner end is comprised of an elastomeric material; wherein the radially inner end of each spoke extends a length in the circumferential direction from a first circumferential location to a second circumferential location; wherein the second circumferential location adjoins the first circumferential location of each adjacent spoke; wherein the second circumferential location is positioned radially outward from the first circumferential location of the adjacent spoke such that the radially inner end of each spoke overlaps the radially inner end of the adjacent spoke in the circumferential direction.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a lateral side view of a finite element model of the radially inner end a non-pneumatic wheel spoke, the spoke undergoing radial compression.
FIG. 2 provides a close-up view of the finite element model of the radially inner end of the non-pneumatic wheel spoke showing a stress concentration pointed to by the arrow.
FIG. 3 provides a lateral side view of a spoke which has begun to crack at or near the location of the stress concentration shown in FIG. 1 and FIG. 2.
FIG. 4 provides a lateral view of the side of a non-pneumatic wheel.
FIG. 5 depicts a perspective view of an embodiment of invention, a spoke having a recess portion in the radially inner foot.
FIG. 6 provides a lateral cross section view of another embodiment having a recessed portion in the radially inner foot.
FIG. 7 provides a lateral side view of an embodiment of the invention having the radially inner end of each spoke overlapping in the radial direction the radially inner end of the adjacent spoke.
FIG. 8 shows a finite element model showing the radially inner end of an embodiment of the invention.

The use of identical or similar reference numerals in different figures denotes identical or similar features.

### DETAILED DESCRIPTION OF THE INVENTION

The present invention provides an improved non-pneumatic tire having improved spoke to hub attachment. For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope of the invention defined by the claims. For instance, features or steps illustrated or described as part of one embodiment, can be used with another embodiment or steps to yield a still further embodiments or methods. Thus, it is intended that the present invention covers such modifications and variations as come within the scope of the appended claims .

The following terms are defined as follows for this disclosure:
"Axial direction" refers to a direction parallel to the axis of rotation of for example, the outer tread band, tire, and/or wheel as it travels along a road surface.
"Radial direction" or the letter "R" in the figures refers to a direction that is orthogonal to the axial direction and extends in the same direction as any radius that extends orthogonally from the axial direction.
"Circumferential direction" or the letter "C" in the figures refers to a direction is orthogonal to the axial direction and orthogonal to a radial direction.
"Forward direction of travel" or the letter "F" in the figures refers to the direction the tire was designed to predominantly travel in for aesthetics and or performance reasons. Travel in a direction different than the forward direction of travel is possible and anticipated.
"Direction of rotation" or the letter "D" in the figures refers to the direction the tire was designed to predominantly rotate in for aesthetics and/or performance reasons. Rotation in a direction opposite than the direction of rotation is possible and anticipated.
"Radial plane" means a plane that passes perpendicular to the equatorial plane and through the axis of rotation of the wheel.
"Lateral direction" or the letter "L" means a direction that is orthogonal to an equatorial plane.

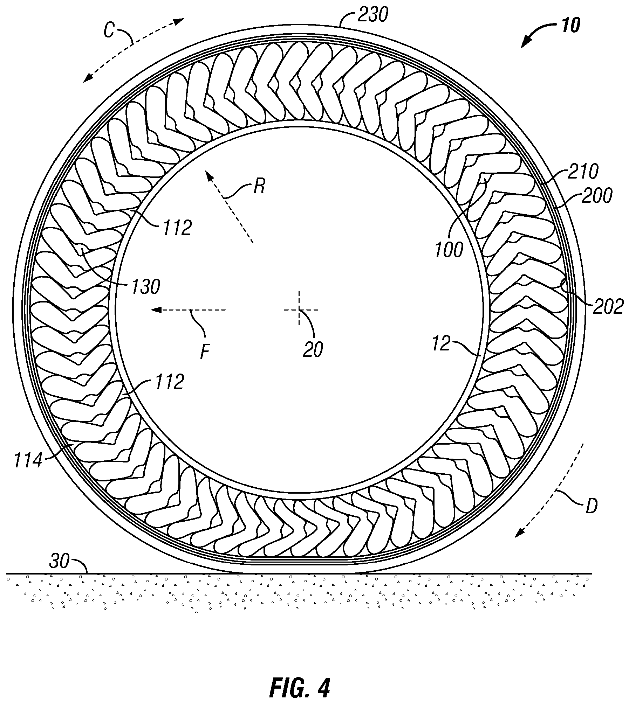

Non-pneumatic wheels may have a central hub to attached the wheel to a vehicle, a radially outer tread band and plurality of spokes connecting the radially outer tread band to the hub. FIG. 4 shows a lateral side view of an exemplary non-pneumatic wheel 10 having a plurality of spokes 100 arranged adjacent to one another in a circumferential direction. The non-pneumatic wheel 10 may be thought of as comprising a non-pneumatic tire which is comprised of the outer tread band 200 attached to a plurality of spokes 100, the non-pneumatic tire which is in turn attached to a hub 12 through the spokes 100. The hub may be attached to a vehicle, such as a passenger vehicle, allowing the vehicle to roll across a ground surface. Other objects and vehicles may incorporate the invention, including but not limited to: heavy duty truck, trailer, light truck, off-road vehicles, ATV, UTV, golf carts, bus, aircraft, agricultural, mining, bicycle, motorcycles. The non-pneumatic wheel 10 possess a hub 12 that would have a radially outer surface having an axis of revolution about a central axis 20. The non-pneumatic wheel 10 may be bonded to the hub 12 by any number of methods including by adhesion. Methods of adhesion may include the use of an adhesive, such as by as cyanoacrylates or polyurethane adhesives.

The wheel 10 shown here possesses an axis of rotation 20 about which the tire 10 rotates. In this exemplary wheel 10, the radially outer surface 230 of the radially outer tread band 200 interfaces with a ground surface 30 over which the tire rolls. Under a nominal load, the spokes 100 of the tire flex as the tire enter and exit the contact patch. Smaller deflections occur in the spokes 100 as the spoke rotates about the axis 20 outside the contact patch, but most of the deflection occurs when the spoke 100 enters, exits and travels through the contact patch region.

In such non-pneumatic wheels 10, the radially inner portion of the spoke possesses a radially inner foot 112 which connects to another surface, the radially outer surface of the hub 12. In this exemplary wheel 10, the radially inner foot 112 is comprised of an elastomeric joint body that connects the radially outer support to the hub 12. The radially outer portion of the spoke 100 possesses a radially outer foot 114 which is comprised of another elastomeric joint body which connects the outer support element to yet another surface, the radially inner surface of the outer tread band 200.

The tread band 200 comprises an elastomeric material and allows deformation to form a planar footprint in the contact patch. The radially outer foot 114 of the spoke 100 is attached to the radially inner surface 202 of the tread band 200. In some instances, the spoke is adhered in place by a urethane adhesive. In other instances, the spoke may be attached by other adhesives, such as a cyanoacrylate adhesive, or may be attached by other methods, including by adhering the elastomeric material together, for instance by using green rubber and curing the rubber components together, or using a strip of green rubber between cured or partially cured rubber components, or using a cold vulcanization process such as by using a rubber cement.

Extending in a generally radially outward direction from the radially inner foot 112 is the spoke leg 140. In the embodiment shown, there are two spoke legs 140 joined by a nose portion 130 forming an intermediate portion. Other embodiments may have a single spoke leg, forming an intermediate portion, attaching the radially inner foot to the radially outer foot.

In some instances, the outer band 200 possesses reinforcement 210 to strengthen the outer tread band. A tread 230 may be provided on the radially outer surface of the outer band 200 to provide edges to aid in traction, such as by providing tread blocks and associated lateral and longitudinal grooves between the tread blocks. In other instances the outer tread band 200 may be smooth. In the embodiment disclosed herein, the reinforcement 210 is in the form of a circumferentially oriented fiber reinforced composite material. In other embodiments, other material such as metal may be used as a reinforcement to strengthen the bond. In such metallic reinforced outer band structures, the metal may take the form of one or more cables wound around the axis of rotation 20 of the wheel 10. In some embodiments, the outer tread band 200 may lack a reinforcement structure to help carry the load circumferentially around the wheel.

For this particular exemplary wheel shown, the size of the tire 100 is similar to a pneumatic tire size of 215/45R17 with the lateral width of the tread being about 215 mm and having a diameter of the outer tread band of about 620 mm.

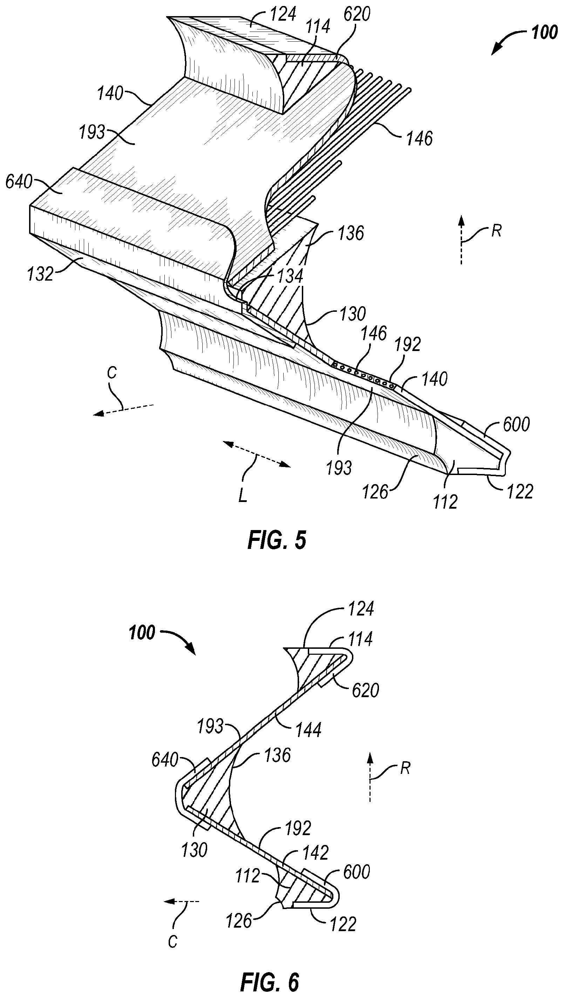

Each spoke 100 of the exemplary embodiment possesses a "nose" portion 130 which acts as a resilient hinge as shown in FIG 5. The "nose" portion 130 is an elastomeric joint body 136 connecting a support element 140 forming the radially inner portion of the spoke and a support element 140 forming the radially outer portion of the spoke. The support elements 140 of the spoke 100 are initially positioned at an angle relative to each other. The angle between the spoke support elements measuring less than 180 degrees is the interior angle and the angle between the spoke support elements measuring greater than 180 degrees is the exterior angle. Likewise, the surface on the exterior angle side of the spoke 100 is referred to as the exterior angle surface 193 while the surface on the interior angle side of the spoke 100 is referred to herein as the interior angle surface 192. The elastomeric joint 136 is comprised of an elastomer attached to each spoke support element and is positioned on the side of the spoke elements on the interior angle side.

FIG. 5 shows a perspective cutaway view of the exemplary spoke embodiment 100 with portions removed to show the embodiment's components including reinforcement location and orientation. This embodiment possesses a nose reinforcement membrane 640 which comprises of a woven fiber fabric with the fibers places at an angle, or at a bias, to the lateral direction (L). The figure also shows the leg reinforcements 146 of the spoke legs 140. In this embodiment, both the radially inner foot 112 and the radially outer foot 114 possess reinforcement membranes 600, 620, similar to the nose reinforcement membrane 134 which are shown as well. In this embodiment, approximately half of the reinforcement cords 134 of the nose membrane 640 of this particular embodiment are oriented at a +45 degree angle and the other half of the reinforcement cords 134 of the nose membrane 640 are oriented at a -45 degree angle to the equatorial plane and wrapped around the nose 130 of the spoke 100. Likewise, approximately half of the reinforcement cords of the foot reinforcement membranes 600 and 620 of this particular embodiment are oriented at a +45 degree angle and the other half of reinforcement membranes 600 and 620 are oriented at a -45 degree angle to the equatorial plane and wrapped around each foot 112, 114 of the spoke 100.

The cords of reinforcement membranes 640, 600, and 620 in this embodiment are interwoven. In other embodiments, the cords may be laid and not interwoven at different angles, or in yet other embodiments they may have the same angle as one another. In other embodiments, reinforcement membranes may also be laid upon one another, each having similar cord angles or distinct cord angles to one another. The support element 140 reinforcements 146 are shown as elongated reinforcements oriented generally in the radial direction along the length of the support elements 140. In this embodiment the support element 140 reinforcements 146 are comprised of pultruded fiberglass resin rods. These reinforcements 146 are embedded in a rubber elastomer to form the support element 140 of the spoke 100. It should be understood that other reinforcements or combinations of reinforcements and may be possible including using, but not limited to using carbon fiber composite materials, aramid fiber composite materials or metal reinforcements. The reinforcements 146 have a higher bending stiffness than the elastomeric material that surround them. Since the reinforcements 146 are stiffer than the same thickness of the rubber material forming the elastomeric joint bodies, the support elements 140 are considered to have a higher bending stiffness than the elastomeric joint bodies.

In the embodiment, the spoke maintains a similar cross section profile in the lateral (L) direction of the spoke. It can be seen that the feet 110, both the radially inner foot 112 and radially outer foot 114, each provide an attachment point to the hub 12 and outer band 200 of the wheel 10. A widening in the circumferential direction at the radially inner end of the radially inner foot 112 provides circumferentially broad surface 122 for attachment, such as adhering, bonding and/or mechanically, to the hub 12. A reinforcement membrane 600 is positioned at the narrow portion of the radially inner foot 112. Likewise a widening in the circumferential direction at the radially outer end of the radially outer foot 114 provides circumferentially broad surface 124 for attachment, such as adhering, bonding and/or mechanically, to the outer tread band 200. A reinforcement membrane 620 is positioned at the narrow portion of the radially outer foot 114. The radially inner surface 122 and radially outer surface 124 in the embodiment shown are shown to be slightly curved in the circumferential direction of the spoke to match the radius of curvature of the hub and radially inner surface 202 of the outer band 200 at the location where the spoke attaches in the respective positions. Alternatively, the surface of the radially inner surface 122, radially outer surface 124, or both may also be flat in the circumferential direction of the spoke.

As shown in FIG. 5 and FIG. 6 the radially inner foot 112 possesses a set-back portion or recessed portion 126 near the radially inner surface 122 of the spoke 100 which creates a nesting surface that can receive the surface on the interior angle side of the spoke of the adjacent spoke. In other words, the recessed portion 126 of the radially inner foot 112 radially overlaps the radially inner foot 112 of the adjacent spoke.

FIG. 6 provides a cross section view of an exemplary embodiment of the spoke 100. It should be understood that while the spoke 100 shown here possesses a radially outer reinforcement membrane 620, a radially inner reinforcement membrane 600 and a nose reinforcement membrane 640, the spoke may lack any one, two or all three of these membranes and still be within the scope of the invention.

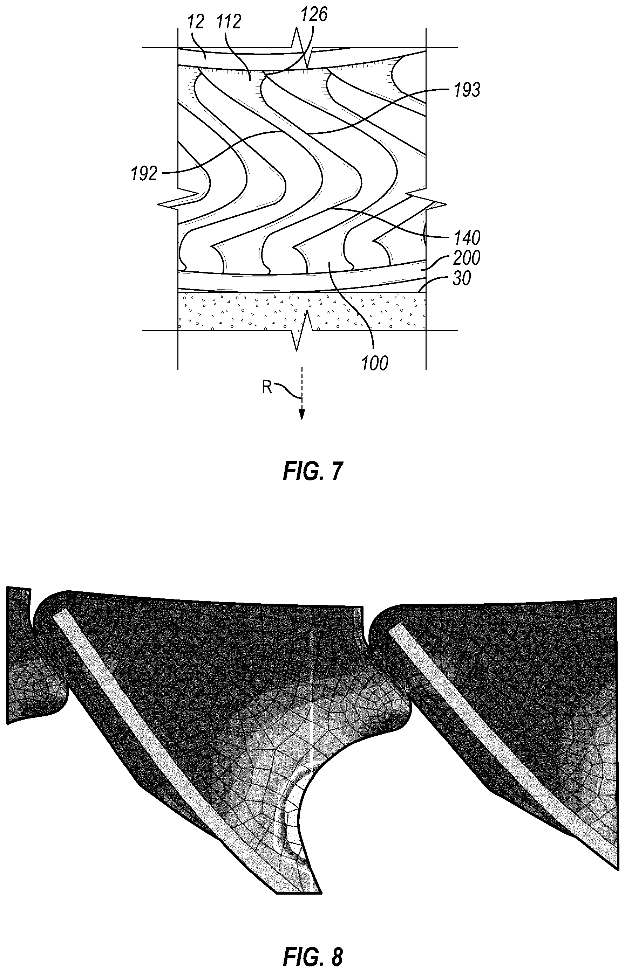

The recessed portion 126 is between the exterior angle surface 193 side of the spoke 100 and the radially inner surface 122. The recessed portion 126 is shown here to have a quarter circle contoured cross section, but it should be understood that other cross section shapes may be possible within the scope of the invention. The quarter circle contoured cross section of the recessed portion 126 of the spoke allows it to press against the interior angle surface 192 of the adjacent spoke as shown in FIG. 7.

FIG. 7 shows an embodiment non-pneumatic wheel pressed against the surface of the ground 30 with the circular outer tread band 200 pressed flat against the ground surface 30. The cutaway view is positioned in approximately middle of the contact patch. The spokes within the contact patch are compressed in the radial direction R, which in turn causes the spoke legs 140 to move closer to the hub 12. This movement in turn compresses the elastomeric joint body of the radially inner foot 112 and presses it against the adjacent radially inner foot 112 of the adjacent spoke. This compresses the adjacent spoke's radially inner foot 112 towards the hub 112 reducing any tensile stresses that may be present.

Fig 8. Shows a finite element model of the radially inner end 112 of another embodiment under loading. In the model, the hub is not shown, but instead the radially inner surface 122 of the radially inner portion 112 of the spoke 100 is fixed in position. Stress along the tip of the adjacent spoke can be seen to be relatively uniform, with no significant stress concentrations.

In this embodiment, the recessed surface 126 is bonded to the adjacent interior angle surface 192 of the adjacent spoke. In other embodiments, the surfaces may be left unbonded. FIG. 7 also depicts the recess surface 126 of the spoke to be complimentary to the interior angle surface 192 of the adjacent spoke. In other embodiments the recess surface 126 may not be complimentary, and instead leave gaps between the interior angle surface 192 of the adjacent spoke and the recess surface 126 which may or may not be filled in with a bonding agent, such as an adhesive.

Selected combinations of aspects of the disclosed technology correspond to a plurality of different embodiments of the present invention. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm").

As used herein, the term "method" or "process" refers to one or more steps that may be performed in other ordering than shown without departing from the scope of the presently disclosed invention. As used herein, the term "method" or "process" may include one or more steps performed at least by one electronic or computer-based apparatus. Any sequence of steps is exemplary and is not intended to limit methods described herein to any particular sequence, nor is it intended to preclude adding steps, omitting steps, repeating steps, or performing steps simultaneously. As used herein, the term "method" or "process" may include one or more steps performed at least by one electronic or computer-based apparatus having a processor for executing instructions that carry out the steps.

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

The citation of any document is not an admission that it is prior art with respect to any invention disclosed or claimed herein or that it alone, or in any combination with any other reference or references, teaches, suggests or discloses any such invention.

## Claims

1. A non-pneumatic wheel (10) having axis of rotation (20) and an axial direction parallel to the axis of rotation (20), a radial direction (R) extending in all directions perpendicular to the axis of rotation (20) and a circumferential direction perpendicular to the radial direction (R) and extending in a plane normal to the axis of rotation (20), the non-pneumatic wheel (10) having a hub (12) for attachment to a vehicle, a radially outer tread band (200), and a plurality of spokes (100) attaching the radially outer tread band (200) to the hub (12), each of the spokes (100) comprising:
a radially outer end attached to the radially outer tread band (200);
a radially inner end (112) attached to the hub (12);
an intermediate portion connecting the radially outer end and the radially inner end (112);
wherein the radially inner end (112) comprised of an elastomeric material;
wherein the radially inner end (112) of each spoke (100) extends a length in the circumferential direction from a first circumferential location to a second circumferential location;
wherein the second circumferential location adjoins the first circumferential location of each adjacent spoke (100);
**characterised in that** the second circumferential location is positioned radially outward from the first circumferential location of the adjacent spoke (100) such that the radially inner end (112) of each spoke (100) overlaps the radially inner end (112) of the adjacent spoke (100) in the circumferential direction.

2. The non-pneumatic wheel (10) of claim 1 wherein the intermediate portion is comprised of a first reinforcement having a bending stiffness relatively higher than that of the elastomeric radially inner end (112).

3. The non-pneumatic wheel (10) of claim 2 wherein the radially outer end is comprised of elastomeric material.

4. The non-pneumatic wheel (10) of claim 3 wherein the intermediate portion is further comprised of an intermediate joint body comprised of elastomeric material joining the first reinforcement to a second reinforcement, wherein the first reinforcement is joined to the hub (12) by the radially inner end (112) and the second reinforcement is joined to the outer band by the radially outer end.

5. The non-pneumatic wheel (10) of any one of the above claims wherein the first circumferential location on the radially inner end (112) possesses a reinforcement membrane (600, 620, 640) wrapping around the radially inner end (112) of the first reinforcement.

6. The non-pneumatic wheel (10) of claim 5 wherein the reinforcement membrane (600, 620, 640) is a woven textile product.

7. The non-pneumatic wheel (10) of claim 6 wherein the woven textile product is placed such that the length of the fibers run at an angle to the axial direction.

8. The non-pneumatic wheel (10) of any one of the above claims wherein the radially inner end (112) of each spoke (100) is attached to the hub (12) by an adhesive.

9. The non-pneumatic wheel (10) of claim 8 wherein the second circumferential location is bonded to the first circumferential location of each adjacent spoke (100).

10. The non-pneumatic wheel (10) of any one of the above claims wherein the radially outer end of each spoke (100) is attached to the radially outer band by an adhesive.

11. The non-pneumatic wheel (10) of any of the preceding claims, wherein each spoke (100) is radially overlapping and bonded to an adjacent spoke (100).

12. The non-pneumatic wheel (10) of claim 11 wherein each spoke (100) possesses an exterior angle and an interior angle and each spoke's exterior angle side possesses a recess that overlaps the interior angle side of the adjacent spoke (100).

13. A method of constructing a non-pneumatic wheel (10) having a hub (12), an outer tread band (200) and a plurality of spokes (100) joining the hub (12) and outer tread band (200), wherein each spoke (100) of the plurality spokes (100) is positioned and bonded to the hub (12) such that a portion of a radially inner foot (112) the spoke (100) overlaps a portion of a radially inner foot (112) of an adjacent spoke (100).

14. A non-pneumatic wheel (10) constructed in accordance with claim 13.

## Patentansprüche

1. Nichtpneumatischer Reifen (10), der eine Rotationsachse (20) und eine Axialrichtung parallel zu der Rotationsachse (20), eine Radialrichtung (R), die sich in allen Richtungen senkrecht zu der Rotationsachse (20) erstreckt, und eine Umfangsrichtung senkrecht zu der Radialrichtung (R) und sich in einer Ebene normal auf die Rotationsachse (20) erstreckend aufweist, wobei der nichtpneumatische Reifen (10) eine Nabe (12) zur Befestigung an einem Fahrzeug, ein radial äußeres Laufflächenband (200) und mehrere Speichen (100), die das radial äußere Laufflächenband (200) an der Nabe (12) befestigen aufweist, wobei jede der Speichen (100) Folgendes umfasst:
ein radial äußeres Ende, das an dem radial äußeren Laufflächenband (200) befestigt ist;
ein radial inneres Ende (112), das an der Nabe (12) befestigt ist;
einen Zwischenabschnitt, der das radial äußere Ende und das radial innere Ende (112)verbindet;
wobei das radial innere Ende (112) ein Elastomermaterial umfasst;
wobei das radial innere Ende (112) jeder Speiche (100) sich um eine Länge in der Umfangsrichtung von einem ersten Umfangsort zu einem zweiten Umfangsort erstreckt;
wobei der zweite Umfangsort an dem ersten Umfangsort jeder angrenzenden Speiche (100) anliegt;
**dadurch gekennzeichnet, dass** der zweite Umfangsort radial außerhalb des ersten Umfangsorts der angrenzenden Speiche (100) positioniert ist, sodass das radial innere Ende (112) jeder Speiche (100) das radial innere Ende (112) der angrenzenden Speiche (100) in der Umfangsrichtung überlappt.

2. Nichtpneumatischer Reifen (10) nach Anspruch 1, wobei der Zwischenabschnitt eine erste Verstärkung umfasst, die eine Biegefestigkeit relativ höher als das radial innere Elastomerende (112) aufweist.

3. Nichtpneumatischer Reifen (10) nach Anspruch 2, wobei das radial äußere Ende ein Elastomermaterial umfasst.

4. Nichtpneumatischer Reifen (10) nach Anspruch 3, wobei der Zwischenabschnitt ferner einen Zwischenverbindungskörper umfasst, der ein Elastomermaterial umfasst, das die erste Verstärkung mit einer zweiten Verstärkung verbindet, wobei die erste Verstärkung mit der Nabe (12) durch das radial innere Ende (112) verbunden ist und die zweite Verstärkung mit dem äußeren Band durch das radial äußere Ende verbunden ist.

5. Nichtpneumatischer Reifen (10) nach einem der vorstehenden Ansprüche, wobei der erste Umfangsort an dem radial inneren Ende (112) eine Verstärkungsmembran (600, 620, 640) besitzt, die um das radial innere Ende (112) der ersten Verstärkung gewickelt ist.

6. Nichtpneumatischer Reifen (10) nach Anspruch 5, wobei die Verstärkungsmembran (600, 620, 640) ein Textilgewebeprodukt ist.

7. Nichtpneumatischer Reifen (10) nach Anspruch 6, wobei das Textilgewebeprodukt so platziert ist, dass die Länge der Fasern in einem Winkel zu der Axialrichtung verläuft.

8. Nichtpneumatischer Reifen (10) nach einem der vorstehenden Ansprüche, wobei das radial innere Ende (112) jeder Speiche (100) an der Nabe (12) durch einen Klebstoff befestigt ist.

9. Nichtpneumatischer Reifen (10) nach Anspruch 8, wobei der zweite Umfangsort an den ersten Umfangsort jeder angrenzenden Speiche (100) gebondet ist.

10. Nichtpneumatischer Reifen (10) nach einem der vorstehenden Ansprüche, wobei das radial äußere Ende jeder Speiche (100) an dem radial äußeren Band durch einen Klebstoff befestigt ist.

11. Nichtpneumatischer Reifen (10) nach einem der vorstehenden Ansprüche, wobei jede Speiche (100) eine angrenzende Speiche (100) radial überlappt und an diese gebondet ist.

12. Nichtpneumatischer Reifen (10) nach Anspruch 11, wobei jede Speiche (100) einen außenliegenden Winkel und einen innenliegenden Winkel besitzt und eine Seite des außenliegenden Winkels der Speiche eine Vertiefung besitzt, die eine Seite des innenliegenden Winkels der angrenzenden Speiche (100) überlappt.

13. Verfahren zum Herstellen eines nichtpneumatischen Reifens (10), der eine Nabe (12), ein äußeres Laufflächenband (200) und mehrere Speichen (100) aufweist, die die Nabe (12) und das äußere Laufflächenband (200) verbinden, wobei jede Speiche (100) der mehreren Speichen (100) so positioniert und an die Nabe (12) gebondet ist, dass ein Abschnitt eines radial inneren Fußes (112) der Speiche (100) einen Abschnitt eines radial inneren Fußes (112) einer angrenzenden Speiche (100) überlappt.

14. Nichtpneumatischer Reifen (10), der nach Anspruch 13 hergestellt wurde.

## Revendications

1. Roue non pneumatique (10) présentant un axe de rotation (20) et une direction axiale parallèle à l'axe de rotation (20), une direction radiale (R) s'étendant dans toutes les directions perpendiculairement à l'axe de rotation (20) et une direction circonférentielle perpendiculaire à la direction radiale (R) et s'étendant dans un plan normal à l'axe de rotation (20), la roue non pneumatique (10) comportant un moyeu (12) destiné à être fixé à un véhicule, une bande de roulement radialement extérieure (200), et une pluralité de rayons (100) fixant la bande de roulement radialement extérieure (200) au moyeu (12), chacun des rayons (100) comprenant :
une extrémité radialement extérieure fixée à la bande de roulement radialement extérieure (200) ;
une extrémité radialement intérieure (112) fixée au moyeu (12) ;
une partie intermédiaire reliant l'extrémité radialement extérieure et l'extrémité radialement intérieure (112) ;
dans laquelle l'extrémité radialement intérieure (112) est constituée d'un matériau élastomère ;
dans laquelle l'extrémité radialement intérieure (112) de chaque rayon (100) s'étend sur une longueur dans la direction circonférentielle à partir d'un premier emplacement circonférentiel vers un deuxième emplacement circonférentiel ;
dans laquelle le deuxième emplacement circonférentiel jouxte le premier emplacement circonférentiel de chaque rayon (100) adjacent ;
**caractérisée en ce que**
le deuxième emplacement circonférentiel est positionné radialement à l'extérieur du premier emplacement circonférentiel du rayon (100) adjacent, de telle façon que l'extrémité radialement intérieure (112) de chaque rayon (100) chevauche l'extrémité radialement intérieure (112) du rayon (100) adjacent dans la direction circonférentielle.

2. Roue non pneumatique (10) selon la revendication 1, dans laquelle la partie intermédiaire est constituée d'un premier renforcement dont la rigidité à la flexion est relativement plus élevée que celle de l'extrémité radialement intérieure (112) élastomère.

3. Roue non pneumatique (10) selon la revendication 2, dans laquelle l'extrémité radialement extérieure est constituée d'un matériau élastomère.

4. Roue non pneumatique (10) selon la revendication 3, dans laquelle la partie intermédiaire comprend en outre un corps de jonction intermédiaire constitué d'un matériau élastomère reliant le premier renforcement à un deuxième renforcement, dans laquelle le premier renforcement est relié au moyeu (12) par l'extrémité radialement intérieure (112) et le deuxième renforcement est relié à la bande extérieure par l'extrémité radialement extérieure.

5. Roue non pneumatique (10) selon l'une quelconque des revendications précédentes, dans laquelle le premier emplacement circonférentiel à l'extrémité radialement intérieure (112) possède une membrane de renforcement (600, 620, 640) enroulée autour de l'extrémité radialement intérieure (112) du premier renforcement.

6. Roue non pneumatique (10) selon la revendication 5, dans laquelle la membrane de renforcement (600, 620, 640) est un produit textile tissé.

7. Roue non pneumatique (10) selon la revendication 6, dans laquelle le produit textile tissé est placé de manière à ce que la longueur des fibres s'étende selon un angle par rapport à la direction axiale.

8. Roue non pneumatique (10) selon l'une quelconque des revendications précédentes, dans laquelle l'extrémité radialement intérieure (112) de chaque rayon (100) est fixée au moyeu (12) par un adhésif.

9. Roue non pneumatique (10) selon la revendication 8, dans laquelle le deuxième emplacement circonférentiel est collé au premier emplacement circonférentiel de chaque rayon (100) adjacent.

10. Roue non pneumatique (10) selon l'une quelconque des revendications précédentes, dans laquelle l'extrémité radialement extérieure de chaque rayon (100) est fixée à l'extrémité radialement extérieure par un adhésif.

11. Roue non pneumatique (10) selon l'une quelconque des revendications précédentes, dans laquelle chaque rayon (100) chevauche radialement un rayon (100) adjacent tout en étant collé à celui-ci.

12. Roue non pneumatique (10) selon la revendication 11, dans laquelle chaque rayon (100) possède un angle extérieur et un angle intérieur et chaque côté d'angle extérieur de rayon possède une cavité chevauchant le côté d'angle intérieur du rayon (100) adjacent.

13. Procédé de construction d'une roue non pneumatique (10) comprenant un moyeu (12), une bande de roulement extérieure (200) et une pluralité de rayons (100) reliant le moyeu (12) et la bande de roulement extérieure (200), dans lequel chaque rayon (100) de la pluralité de rayons (100) est positionné et collé au moyeu (12) de telle façon qu'une partie d'un pied radialement intérieur (112) du rayon (100) chevauche une partie d'un pied radialement intérieur (112) d'un rayon (100) adjacent.

14. Roue non pneumatique (10) construite selon la revendication 13.
